# EUROPEAN PATENT SPECIFICATION

(11) **EP 0 768 027 B1**
(45) Date of publication and mention of the grant of the patent: **17.07.2002**
(21) Application number: 96203466.6
(22) Date of filing: 20.04.1993
(51) Int. Cl.: A01K 1/12, A01J 5/017

(54) **A Construction for automatically milking animals**
Gerät zum automatischen Melken von Tieren
Dispositif de traite automatique d'animaux

(30) Priority: 21.04.1992 NL 9200714
(43) Date of publication of application: 16.04.1997
(62) Divisional of application: 93201126.5
(73) Proprietor: MAASLAND N.V., 3155 PD Maasland (NL)
(72) Inventor: van der Lely, Cornelis, 6300 ZUG (CH)
(74) Representative: Corten, Maurice Jean F.M.

(56) References cited:
- EP-A- 0 332 229
- DE-C- 3 804 970
- FR-A- 2 550 053
- US-A- 3 246 631
- US-A- 3 460 515

## Description

The present invention relates to a construction for automatically milking animals, such as cows, as described in the preamble of claim 1. A construction of this type is known from EP-A-0332229. Since these constructions may be installed on or may be part of a location on a farm, they are not always universally usable; more in particular in a dairy farm the problem may be that the distance of an animal to the automatic milking machine might be undesirable large. The invention has for its object to obviate such disadvantages. Therefore, according to the invention, the construction is characterized by the features of claim 1. This has the advantage that, by dividing the farm into several areas, the distance between an animal to be milked and the automatic milking machine becomes sufficiently short providing an advantageous milk production system. More specifically, the construction is mobile in such a manner that the animals can automatically be milked in a pasture and in a cow building. The afore-mentioned separate areas of the farm may include a building and various portions of a pasture. Because of the fact that the construction is mobile, it can be set-up in a plurality of places both inside the farm buildings or cow shed and in a pasture; this flexibility in the location of the construction does not only provide a construction that is widely applicable but also results in a higher degree of operational reliability, i.e. an increased degree of certainty that a relatively large number of cows will be milked automatically the required number of times, for example three times, per 24 hours' period, in the cow shed and/or in a pasture. Preferably, the animals are milked when they move in a pasture from a first pasture section to a second pasture section. The automatic milking construction comprises a mobile milking box, in which a milking robot is accommodated. Preferably, the milking box is movable with the aid of a tractor. For that purpose, the milking box is provided with a frame, by means of which it is connectable to the lifting device of the tractor.

In accordance with a further feature of the invention, the milking box includes means for supplying food to an animal being present in the milking box, the milking box being positioned where green food is available to the animal. If the construction is positioned in a cow shed or such building, then, in the area in which the animals are located for the automatic milking operation green food or silage can be made available to them, whilst the animals in the milking box proper can be supplied with concentrated food. More in particular, when flavours, such as molasses, are supplied, the animals will tend to go to the milking box. When the construction is used at a pasture, concentrated food can be taken along together with the milking box to the location where the milking box should be installed. The cows can be induced to enter the milking box even when they have fresh grass at their disposal. To ensure that the animals move from a first pasture section to the milking box, the construction is provided with a movable expelling device connected to the milking box. This device is of such a design that with the aid thereof the animals can be driven from a certain pasture to the milking box. To that end, in accordance with the invention, the expelling device is provided with at least one first arm which is pivotal about an upwardly directed shaft.
Mounted at or near the end of this first arm there may be provided a second arm which is pivotal relative to this first arm. The pivotability of the two arms is preferably effected by means of stepping motors. An electric fence wire which more particularly is suspended from the second arm may be mounted at or near the end of this arm. The expelling device may furthermore be provided with an infrared sensor, provided on the milking box, for finding the location of an animal. The expelling device is more specifically of importance when only a few cows are still present in the pasture section, from which they are to proceed to the milking box. By means of the infrared sensor the approximate position of the animals can be determined, whilst using the dual-arm expelling device and the electric fence wires suspended therefrom an animal can be guided to the milking box. An animal present in a pasture section may enter the milking box, if necessary by means of the expelling device. The construction may further be arranged in such a way that after the animal has left the milking box it will arrive in an adjoining pasture section. The construction is of such a design that the animals can move freely, while means are provided which promote the circulation of the animals through the milking box. The animals can namely proceed from a first pasture section via the automatic milking construction to a second pasture section without the construction being moved from the last-mentioned second pasture section to the first-mentioned pasture section. The entrances and the exits are preferably arranged at lateral sides of the two compartments. Further, these compartments may have a feed trough which is connected to concentrated food storage means disposed on top of the construction. In a preferred embodiment the milking machine comprises only one milking robot, which can be used in both compartments. Since the animals go either from the first pasture section via a compartment in the milking box to a second pasture section, or the other way round from said
last second pasture section via the other compartment to said first pasture section, the presence of only one milking robot is sufficient; according to the invention, this milking robot is positioned in the centre of the partition of the two compartments and is movable under an animal standing in a compartment. The milking robot can be pivoted to under an animal in one compartment as well as under an animal present in the other compartment. Although the construction can be set-up at the boundary between two pasture sections, which in other respects are divided from each other, and is of such an implementation that animals can move from one pasture section to the other pasture section via one compartment and from said last other pasture section to the said first pasture section via the other compartment, it is also possible to install the implement on the boundary between two pasture sections which in other respects are partly separated from each other, as a result of which it is possible that an animal will perform a circulating movement through the said pasture sections between milking times and passes through the milking box in only one direction. In that case only one single compartment is sufficient. It is important for the construction to be on the boundary between two pasture sections; this boundary will, however, not always be present or not in the proper manner be present. According to the invention, an entirely or partly provided partition between two pasture sections may be formed by arms which are so disposed on the construction that they can be folded outwardly with an electric fence provided to the construction. This has the advantage that, whereever the construction is to be located in a pasture, a partition and two pasture sections are created in that region with the aid of foldable arms with electric fence wire, it then being possible for the animals to go from one pasture section via the automatic milking construction to the other pasture section. The pasture may be undivided. With the aid of the foldable arms a section of the pasture might however be divided into two sections. It is advantageous when the size of the pasture area is such that it can be divided into two sections. In accordance with the invention, the construction forms part of a pasture system, in which the fence of a part of the pasture is mobile. This fence can be realized with the aid of four foldable arms, whilst the ends of the arms can be interconnected and comprise a mobile fence. With a view to its transport, the fence is preferably foldable. In view of the dimensions of the outwardly foldable fence, the fence is preferably supported by ground wheels. Positioned under the ends of the outwardly foldable arms there are supports to which these ground wheels as well as an electric fence wire can be mounted at a height of, for example, approximately 1 meter above the ground. As the milking box may be moved by a tractor, the implement for automatically milking animals can be used in several locations in a pasture. It can however also be used all the year round as it may be positioned by the tractor in a cow shed or in another type of building in the winter months. It may be used in a building where cows can move through the building and where the cows could enter this building from the pasture.

For a better understanding of the invention and to show how the same may be carried into effect, reference will now be made, by way of example, to the accompanying drawings, in which:
Figure 1 shows a farm land, of which an area intended for grazing by the animals is divided into separate pastures;
Figure 2 shows four pastures of this type and illustrates how a movable milking box is moved from one pasture to an adjoining pasture;
Figure 3 is a schematic view of a milking box consisting of two compartments;
Figure 4 shows the arrangement of a milking box on the boundary of the two sections into which a pasture is divided, as well as the expelling device;
Figure 5 is a plan view of the foldable fence mounted on the milking box, with the aid of which the said pastures can be defined and/or enclosed;
Figure 6 is a side view of the foldable fence shown in Figure 5;
Figure 7 shows a tractor with the milking box coupled thereto and the foldable arms for defining and/or enclosing a pasture and for providing the boundary between two sections, into which this pasture can be divided;
Figure 8 shows the set-up of a milking box having only one compartment in a pasture, which is divided into two sections with only a partial separation between these two sections, and
Figure 9 illustrates the manner in which the milking box can be set-up in a cow shed or a working area.

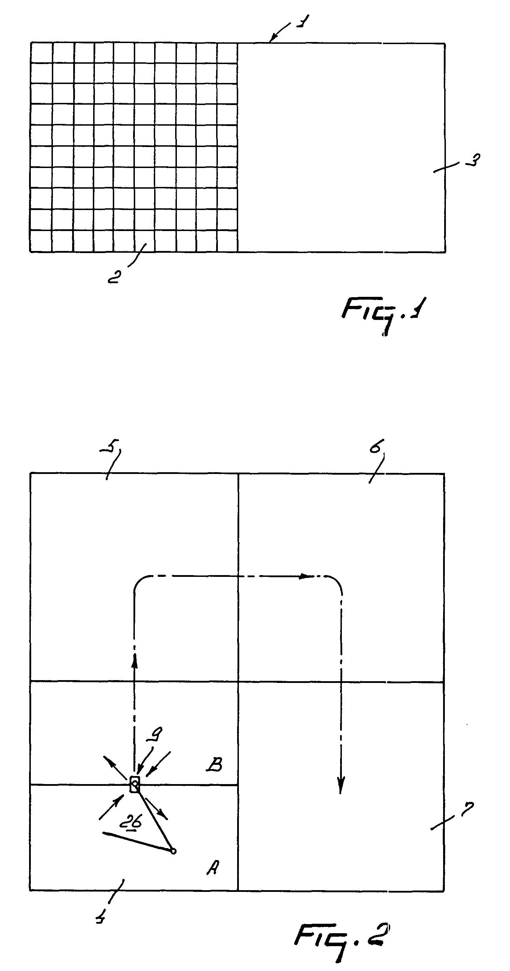

Figure 1 shows farm lands 1, of which an area 2 is divided into smaller sections of, for example, 50 x 50 metres. This subdivided area 2 of the farm lands is intended for grazing by the animals. As soon as such a smaller section, which forms a separate pasture, has been grazed by a number of animals present thereon, the animals can move to an adjoining pasture section, preferably via a milking box, in which they can be milked with the aid of a milking robot. In this manner the separate pastures can consecutively be systematically grazed, if necessary several times. The other section 3 of the farm lands is intended for harvesting fodder to be fed to the animals during the winter, when they will be in the cow shed.
Figure 2 shows, to a different scale than in Figure 1, four pastures 4 - 7. In the left-hand corner of the pasture 4, in the centre, a construction 8 for automatically milking animals is schematically shown, so that during the period of time in which the animals can graze on this pasture they can be milked a number of times. Thereafter the animals present in both the pasture 4 and the automatic milking construction 8 can be moved to the pasture 5 shown in the left-hand top of the drawing. When also this pasture has been grazed, the animals as well as the automatic milking construction 8 can first be moved to the pasture 6 in the right-hand top portion in the drawing and to the pasture 7 shown in the right-hand bottom portion of the drawing. So as to keep the distance between the animals to be milked and the automatic milking construction 8 relatively small, the said construction is always moved together with the animals from one pasture to the other. By dividing a pasture into said smaller sections in which the animals can always stay for some time and because of the resultant shorter distance between animal and milking implement, the efficiency of the milk
production procedure is highly increased.

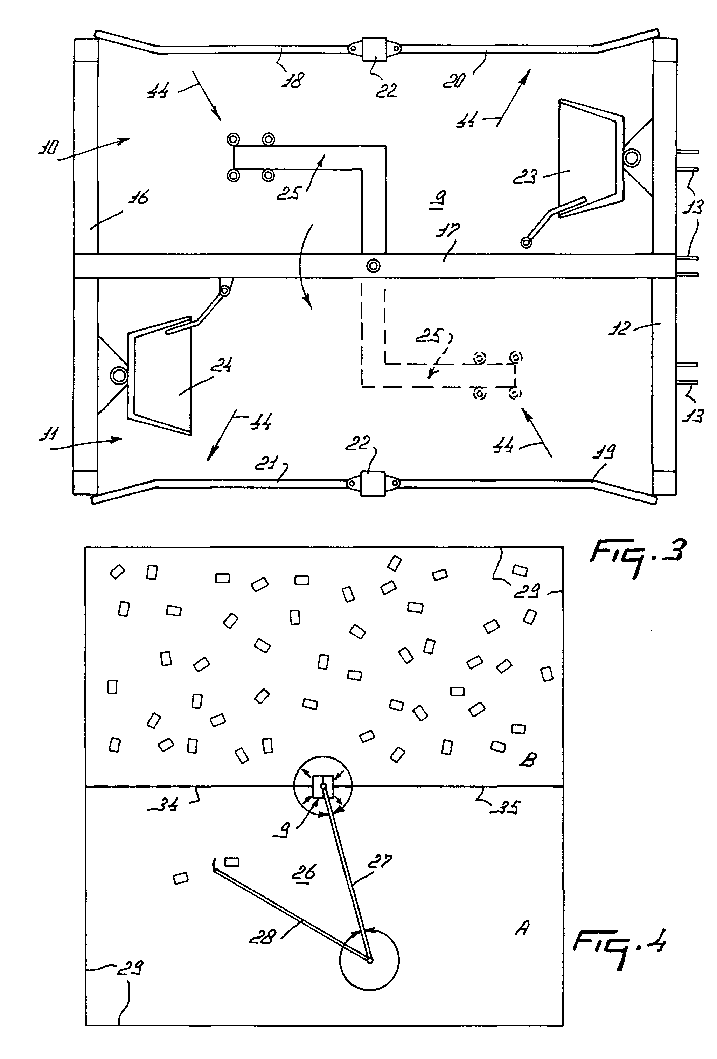

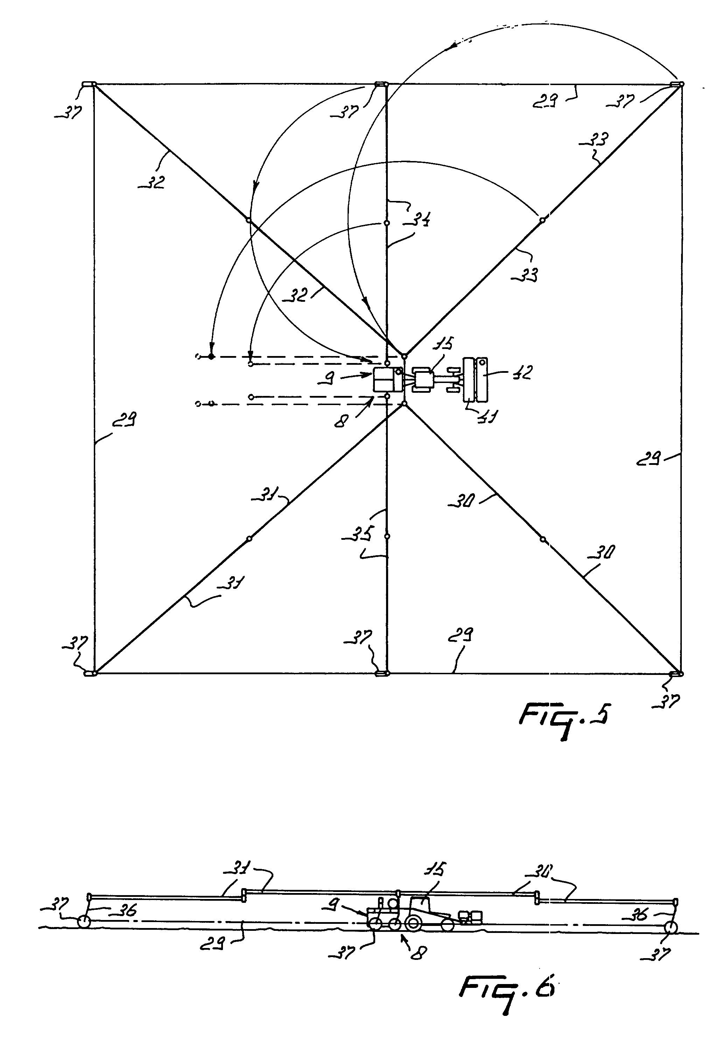

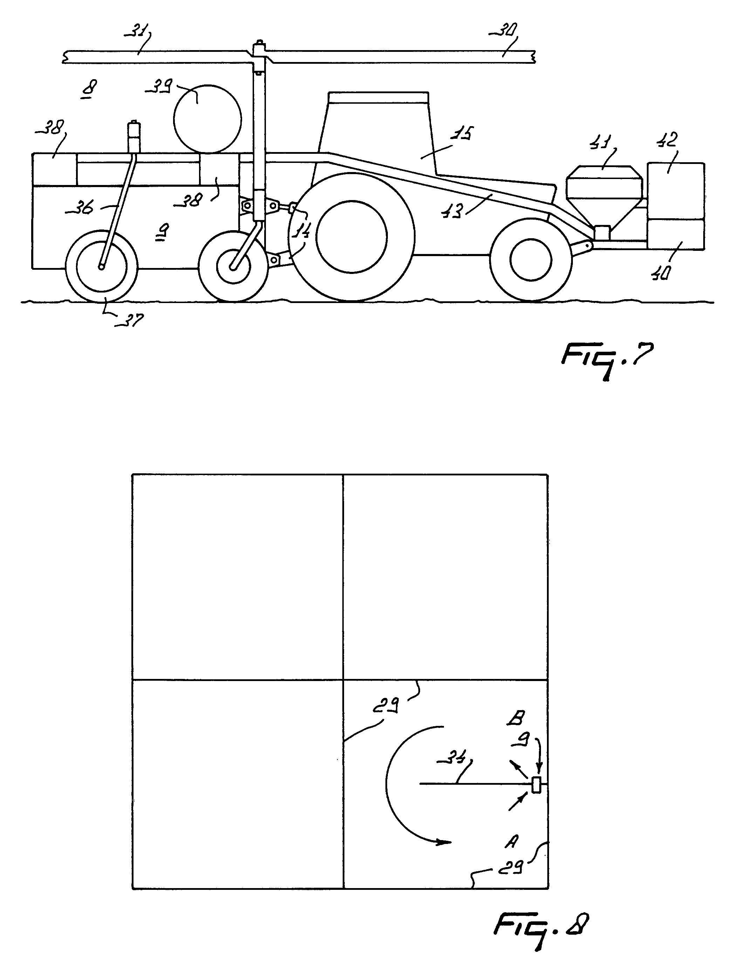

Figure 3 is a schematic view of a portion of the milking box 9 which forms part of the construction 8 and consists of two compartments 10 and 11. The milking box 9 has a front side 12 which is provided with coupling points 13 for coupling the milking box 9 to the lifting device 14 of a tractor 15 (see Figure 7) and to render it possible to move the milking box 9 with the aid of the tractor 15 from one pasture section to another. Taken in the longitudinal direction of the milking box, a fence 17 is provided to divide the milking box 9 into two compartments 10 and 11, each compartment 10, 11 having its own entrance 18 and 19, respectively, and its own exit 20 and 21, respectively. These entrances 18, 19 and exits 20, 21 are arranged at the sides of the milking box 9 and are connected to a frame portion located in the midway point of the lateral side. The two compartments 10 and 11 are of such an arrangement that an animal to be milked can only pass through a compartment in one direction. The direction in which the animal can walk through one compartment is then opposite to the direction in which the animal can walk through the other compartment. In Figure 3 this walking direction is schematically indicated by arrows 44. In each of the compartments 10, 11 there is a feed trough 23 and 24, respectively, while a milking robot 25 is set-up in the midway point of the dividing fence 17, arranged between the leading and trailing side 12 and 16, respectively, of the two compartments 10, 11. This robot preferably is a milking robot which is pivotal from one compartment to the other and which is only shown very schematically in Figure 3. The animals to be milked enter the left-hand compartment 10 via, for example, the entrance 18 in the left-hand bottom side, are supplied there with concentrated food, while the milking robot 25 is moved to under the animal's udder, the teat cups of this robot are connected to the teats of an animal and the animal is thus automatically milked. After milking the animal is guided via the left-hand top exit 20 from the left-hand compartment 10. The animals to be milked are allowed to enter the right-hand compartment 11 via the right-hand top entrance 19, while after the automatic milking operation they can leave this compartment 11 via the right-hand bottom exit 21. Figure 4 shows a pasture which is fenced off with the aid of electric fence wire. In the centre of this pasture area the milking box 9 which is shown in Figure 3 and comprises two compartments 10, 11 is set-up. The pasture area is divided into two sections A and B which are divided from each other in a manner still further to be described with the aid of an electric fence wire. The animals are positioned in one of the two sections and can proceed to the other section via the milking box 9. Animals present in the lower section A shown in Figure 4 can only arrive in the upper section B of Figure 4 via the left-hand compartment 10 of the milking box 9, while the animals present in the upper section B of Figure 4 can only reach the section A via the right-hand compartment 11 of the milking box 9. As concentrated food is fed to the animals in the milking box 9, optionally made attractive by the addition of flavourings, such as molasses, the animals will tend to move at said times from the pasture section where they are staying to the milking box 9. In principle the animals will go without being goaded from a section into the relevant compartment of the milking box 9 when this compartment is free and the entrance is open. In Figure 4 a large number of animals already milked are shown in the upper section B, while in section A there are still two animals which have not yet been milked. Should these animals have an insufficient tendency to enter the milking box 9, then using a special expelling device 26 these animals can be driven from the relevant section area to the milking box and from there to the other section. Before driving the animals from this section their position in section A can first be determined. For that purpose a rotating infrared sensor shown in the drawing may be provided on top of the milking box 9. With the aid of this infrared sensor a further portion of the expelling device 26 can be controlled. To that end the expelling device 26 comprises a first arm 27 which is pivotal about an upwardly directed shaft, while a second arm 28 which is pivotal relative to this first arm is provided at or near the end of this first arm 27. Pivoting of the two arms 27, 28 is effected with the aid of, for example, (now-shown) stepping motors, which are controlled on the basis of the signals produced by the infrared sensor. A descending electric fence wire is suspended at or near the end of the second arm 28. By the combined action of the infrared sensor and the arms 27, 28 controlled thereby and provided with electric fence wire, an animal can be driven from the section A to the milking box 9. When in this manner all the animals have arrived from section A in section B via the milking box 9 in which they have been milked, the animals can if so desired move again via the other compartment 11 of the milking box 9 from section B to section A. In this manner a circulation of the animals to be milked through the milking box can advantageously be obtained.

The pastures may have a permanent enclosure of electric fence wire. It is, however, alternatively possible for the farmer, when the animals are to move from one pasture to the other, to move the fence of the relevant pasture together with the animals. An efficient manner is however obtained when the milking box 9 is provided with a foldable fence 29, so that when the milking box is moved from one pasture to the other the fence automatically travels with it. A possible design of such a foldable fence is shown in Figure 5. The fence of a pasture is then formed by electric fence wire suspended from the ends of four foldable arms 30 - 33, which arms are of such a shape and attached such that the ends, when they are interconnected by a wire, enclose a square corresponding to the dimensions of the relevant pasture. Each of the arms 30 - 33 is foldable in a pivotal point located at approximately half the overall length of the arm, whilst an arm can furthermore, after it has been folded inwardly, that is to say folded double, be folded outwardly to the rear in the longitudinal direction of the milking box 9. Since the relevant pasture section must also be divided into two sections A and B, the milking box can also be provided with foldable arms 34, 35 to divide the pasture into two rectangular sections A and B. Although the arms 30 - 35 are fully foldable and can be hinged rearwardly for the purpose of transport, it may be advantageous to maintain the outwardly folded state when the milking box 9 is moved from one pasture to an adjoining pasture, as obviously the animals located in a section will then automatically move to a relevant section A or B of a subsequent pasture section in which the milking box 9 is then set-up. The ends of the arms 30 - 35 can be provided with supports 36 for ground wheels 37 for the purpose of supporting the outwardly folded and then relatively long arms 30 - 35 at their extreme ends. The electric fence wire 29 which either constitutes the enclosure of a pasture, or forms the division of such a pasture into two sections A and B, is attached to the supports, more specifically preferably at a height of approximately one metre above the soil. A side view of the milking box 9 moved by the tractor 15, the arms being in the outwardly folded state, is illustrated in Figure 6. The tractor 15 and the milking box 9 carried by the lifting device 14 of this tractor is shown to a slightly larger scale in Figure 7. In this Figure it is also shown that hoppers 38 for concentrated fodder are disposed on top of the milking box 9, while in addition a milk tank 39 is disposed on the roof of the milking box 9. In front of the tractor 15 storage tanks for water 40 for cleaning the teat cups and the milk pipe lines of the milking robot and for concentrated food 41 may be present, while a milk tank 42 may also be mounted. From the hopper for concentrated food 41 in front of the tractor, concentrated food can be blown to the spaces 38 above the milking box 9, via a supply pipe 43.

Figure 8 is a view of a pasture in which in the right-hand bottom corner a milking box 9 with only one compartment is arranged. The milking box 9 is moved to near the edge of the pasture, only one of the arms 34 being present to provide a partition between two sections A and B. The partition is shorter than the length of the sections A and B. This renders it possible for the animals to circulate from one section to the other section. In that case the animals pass through the milking box in only one direction.

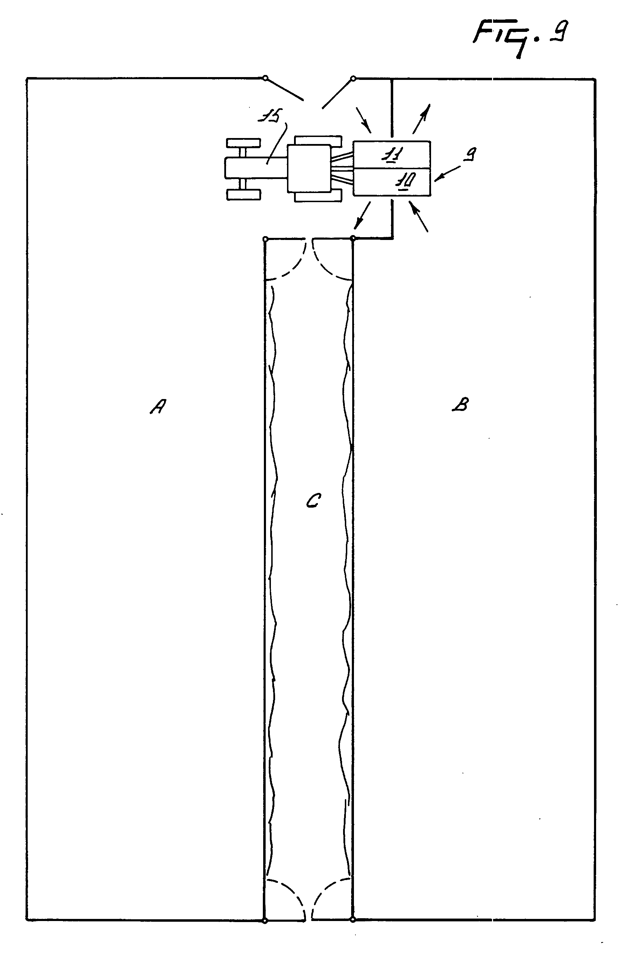

Finally, Figure 9 shows a milking box 9 having two compartments 10, 11 set-up at the boundary between two sections A and B of a cow shed. The two sections A and B of this shed are divided from each other for the major part by a passage C, in which fodder for the animals can be deposited in the feeding gutters at the side of the passage C. Also in this case the animals circulate through the milking box from the section A to the section B and vice versa.

The manner in which the dairy farm, that is to say the cow shed as well as the pasture, is divided into separate areas, provides that the animals are always at a relatively short distance from the milking robot. Although there is fresh grass in the pasture and when the animals are in the cow shed fresh grass is available to them via the feed gutters, the circulation of the animals can be increased by adding flavourings to the concentrated fodder. The specific implementation of the milking box 9 such that it is suitable for use in both a cow shed and in a pasture, as well as the manner in which the various auxiliary means are provided on the milking box 9, more in particular the auxiliary means which ensure that a defined enclosure can be provided in the pasture, furthermore increase the usability of the automatic milking construction to a very considerable extent. The construction is ready for use throughout the year, wherever the animals are located.

The invention is not limited to the embodiment described here, but also comprises all possible modifications in sofar they are within the scope of the accompanying claims. The use of the construction is also in no way limited to a cow shed as illustrated in Figure 9, or to a pasture divided into sections as illustrated in Figure 1.

## Claims

1. A construction for automatically milking animals, such as cows, which construction is mobile to such an extent that the animals can be milked automatically in a pasture as well as in a cow shed, which construction includes a milking box (9), which comprises a milking robot (25), **characterized in that** the milking box (9) includes a movable expelling device (26) connected thereto, so that said animals can be driven from one area (A) to said milking box (9) and from there to another area (B).

2. A construction as claimed in claim 1, **characterized in that** the expelling device (26) includes at least one first arm (27) which is pivotal about an upwardly directed shaft.

3. A construction as claimed in claim 2, **characterized in that** a second arm (28) which is pivotal relative to this first arm (27) is applied at or near the end of the first arm (27).

4. A construction as claimed in claim 3, **characterized in that** the pivotability of the two arms (27, 28) is realized by means of stepping motors.

5. A construction as claimed in claim 3 or 4, **characterized in that** electric fence wire is suspended at or near the end of the second arm (28).

6. A construction as claimed in any one of the preceding claims, **characterized in that** the expelling device (26) includes an infrared sensor, disposed on the milking box (9), for detecting the position of an animal.

7. A construction as claimed in claim 6, **characterized in that** an animal present in a pasture section can move into the milking box (9), if necessary goaded by the expelling device (26), the construction furthermore being set-up such that after the animal has left the milking box (9) it arrives in an adjoining pasture section.

8. A construction as claimed in any one of the preceding claims, **characterized in that** the construction is of such a design that the animal can pass therethrough in two different walking directions.

9. A construction as claimed in any one of the preceding claims, **characterized in that** the construction can be arranged such that the animals can be milked automatically when they move in a pasture from a first section to a second, adjoining section.

10. A construction as claimed in claim 9, **characterized in that** the construction is a mobile milking box, in which a milking box (9) comprising a milking machine with a milking robot (25) is provided.

11. A construction as claimed in claim 10, **characterized in that** the milking box (9) can be moved with the aid of a tractor (15).

12. A construction as claimed in claim 11, **characterized in that** the milking box has a frame, with the aid of which it is couplable to the lifting hitch (14) of the tractor (15).

13. A construction as claimed in claim 8, **characterized in that** the construction includes a milking box (9) having two compartments (10, 11), these compartments (10, 11) having at the lateral side an entrance (18, 19) and an exit (20, 21), which are provided such that the walking direction of an animal through one compartment is opposite to the walking direction of an animal to the other compartment.

14. A construction as claimed in claim 13, **characterized in that** it can be positioned on the boundary between two pasture sections which in all other respects are divided from each other and is arranged such that the animals can move from one pasture section to the other pasture section via one compartment (10 or 11) and from the said last other pasture section to the said first one pasture section via the other compartment (11, respectively 10).

15. A construction as claimed in any one of the preceding claims, **characterized in that** it includes a milking box (9) which has an entrance (18, 19) and an exit (20, 21) and can be positioned in such a manner on the boundary between two pasture sections, which in all other respects are partly separated from each other, that an animal must make a circular movement through the said pasture sections between two consecutive milking times.

16. A construction as claimed in any one of the preceding claims, **characterized in that** a partition which is fully or partly arranged between two pasture sections is constituted by outwardly foldable arms (30 - 33) mounted on the implement, with an electric fence (29) provided to the construction.

17. A construction as claimed in any one of the preceding claims, **characterized in that** the construction forms part of a pasture system in which the fence (29 - 37) of an area of the pasture is mobile.

18. A construction as claimed in claim 17, **characterized in that** the fence (29 - 37) is foldable for the purpose of transport.

19. A construction as claimed in any one of claims 17 or 18, **characterized in that** the fence (29 - 37) is supported by ground wheels (37).

20. A construction as claimed in any one of claims 17 to 19, **characterized in that** the fence (29 - 37) can be moved by a tractor (15).

21. A construction as claimed in any one of claims 17 to 20, **characterized in that** the construction is provided with four foldable arms (30 - 33), a mobile fence of a pasture section being formed by interconnecting the ends of these arms (30 - 33).

22. A construction as claimed in claim 21, **characterized in that** supports (36) for ground wheels (37) are disposed under the ends of the arms (30 - 33).

23. A construction as claimed in claim 21 or 22, **characterized in that** supports for electric fence wire (29) constituting an enclosure of a pasture section are disposed under the ends of the arms (30 - 33).

## Patentansprüche

1. Vorrichtung zum automatischen Melken von Tieren, wie z. B. Kühen, wobei die Vorrichtung derart verfahrbar ist, daß die Tiere sowohl auf einer Weide als auch in einem Kuhstall automatisch gemolken werden können, wobei die Vorrichtung eine Melkbox (9) enthält, die einen Melkroboter (25) umfaßt,
**dadurch gekennzeichnet, daß** die Melkbox (9) eine mit ihr verbundene, bewegbare Austreibvorrichtung (26) aufweist, so daß die Tiere von einem Bereich (A) zu der Melkbox (9) und von dort in einen anderen Bereich (B) getrieben werden können.

2. Vorrichtung nach Anspruch 1,
**dadurch gekennzeichnet, daß** die Austreibvorrichtung (26) mindestens einen ersten Arm (27) aufweist, der um eine aufwärts gerichtete Achse schwenkbar ist.

3. Vorrichtung nach Anspruch 2,
**dadurch gekennzeichnet, daß** ein zweiter Arm (28), der relativ zu diesem ersten Arm (27) schwenkbar ist, an oder nahe dem Ende des ersten Armes (27) angeordnet ist.

4. Vorrichtung nach Anspruch 3,
**dadurch gekennzeichnet, daß** das Verschwenken der beiden Arme (27, 28) mit Hilfe von Schrittmotoren erfolgt.

5. Vorrichtung nach Anspruch 3 oder 4,
**dadurch gekennzeichnet, daß** ein Elektrozaundraht an oder nahe dem Ende des zweiten Armes (28) aufgehängt ist.

6. Vorrichtung nach einem der vorhergehenden Ansprüche,
**dadurch gekennzeichnet, daß** die Austreibvorrichtung (26) einen auf der Melkbox (9) angeordneten Infrarotsensor zur Ermittlung der Position eines Tieres enthält.

7. Vorrichtung nach Anspruch 6,
**dadurch gekennzeichnet, daß** ein sich in einem Weidebereich aufhaltendes Tier zur Melkbox (9) gehen kann, erforderlichenfalls angetrieben durch die Austireibvorrichtung (26), wobei die Vorrichtung ferner derart angeordnet ist, daß das Tier nach Verlassen der Melkbox (9) in einen angrenzenden Weidebereich gelangt.

8. Vorrichtung nach einem der vorhergehenden Ansprüche,
**dadurch gekennzeichnet, daß** die Vorrichtung derart ausgebildet ist, daß das Tier sie in zwei verschiedenen Laufrichtungen durchqueren kann.

9. Vorrichtung nach einem der vorhergehenden Ansprüche,
**dadurch gekennzeichnet, daß** die Vorrichtung derart angeordnet sein kann, daß die Tiere automatisch gemolken werden können, wenn sie sich auf einer Weide von einem ersten Bereich in einen zweiten, angrenzenden Bereich begeben.

10. Vorrichtung nach Anspruch 9,
**dadurch gekennzeichnet, daß** die Vorrichtung eine verfahrbare Melkbox ist, in der eine Melkbox (9) angeordnet ist, die eine Melkmaschine mit einem Melkroboter (25) umfaßt.

11. Vorrichtung nach Anspruch 10,
**dadurch gekennzeichnet, daß** die Melkbox (9) mit Hilfe eines Schleppers (15) bewegt werden kann.

12. Vorrichtung nach Anspruch 11,
**dadurch gekennzeichnet, daß** die Melkbox einen Rahmen aufweist, mit dessen Hilfe sie an die Hebevorrichtung (14) des Schleppers (15) anschließbar ist.

13. Vorrichtung nach Anspruch 8,
**dadurch gekennzeichnet, daß** die Vorrichtung eine Melkbox (9) mit zwei Kammern (10, 11) enthält, wobei diese Kammern (10, 11) an der Längsseite einen Eingang (18, 19) und einen Ausgang (20, 21) aufweisen, die derart angeordnet sind, daß die Laufrichtung eines Tieres durch eine Kammer entgegengesetzt zur Laufrichtung eines Tieres durch die andere Kammer ist.

14. Vorrichtung nach Anspruch 13,
**dadurch gekennzeichnet, daß** sie auf der Grenze zwischen zwei Weidebereichen positioniert werden kann, die ansonsten voneinander getrennt sind, und derart angeordnet ist, daß sich die Tiere über eine Kammer (10 oder 11) von einem Weidebereich in den anderen Weidebereich und über die andere Kammer (11 bzw. 10) von dem letztgenannten anderen Weidebereich in den ersten Weidebereich bewegen können.

15. Vorrichtung nach einem der vorhergehenden Ansprüche,
**dadurch gekennzeichnet, daß** sie eine Melkbox (9) enthält, die einen Eingang (18, 19) und einen Ausgang (20, 21) aufweist und auf der Grenze zwischen zwei Weidebereichen, die ansonsten teilweise voneinander getrennt sind, derart positioniert werden kann, daß ein Tier zwischen zwei aufeinanderfolgenden Melkvorgängen einen kreisförmigen Bewegungsweg durch die Weidebereiche zurücklegen muß.

16. Vorrichtung nach einem der vorhergehenden Ansprüche,
**dadurch gekennzeichnet, daß** eine Trennwand, die ganz oder teilweise zwischen zwei Weidebereichen angeordnet ist, durch nach außen klappbare Arme (30 bis 33) gebildet ist, die an der Vorrichtung angebracht sind, wobei die Vorrichtung mit einem Elektrozaun (29) versehen ist.

17. Vorrichtung nach einem der vorhergehenden Ansprüche,
**dadurch gekennzeichnet, daß** die Vorrichtung Teil eines Weidesystems ist, bei dem der Zaun (29 bis 37) eines Bereiches der Weide transportabel ist.

18. Vorrichtung nach Anspruch 17,
**dadurch gekennzeichnet, daß** der Zaun (29 bis 37) zu Transportzwecken zusammenklappbar ist.

19. Vorrichtung nach einem der Ansprüche 17 oder 18,
**dadurch gekennzeichnet, daß** der Zaun (29 bis 37) durch Bodenräder (37) abgestützt ist.

20. Vorrichtung nach einem der Ansprüche 17 bis 19,
**dadurch gekennzeichnet, daß** der Zaun (29 bis 37) durch einen Schlepper (15) bewegt werden kann.

21. Vorrichtung nach einem der Ansprüche 17 bis 20,
**dadurch gekennzeichnet, daß** die Vorrichtung mit vier klappbaren Armen (30 bis 33) versehen ist, wobei ein transportabler Zaun eines Weidebereiches dadurch gebildet wird, daß die Enden dieser Arme (30 bis 33) miteinander verbunden werden.

22. Vorrichtung nach Anspruch 21,
**dadurch gekennzeichnet, daß** unter den Enden der Arme (30 bis 33) Träger (36) für Bodenräder (37) angeordnet sind.

23. Vorrichtung nach Anspruch 21 oder 22,
**dadurch gekennzeichnet, daß** unter den Enden der Arme (30 bis 33) Stützen für einen Elektrozaun (29) angeordnet sind, der eine Einzäunung für einen Weidebereich bildet.

## Revendications

1. Installation pour la traite automatique d'animaux, tels que des vaches, laquelle installation est mobile dans une mesure telle que les animaux peuvent être traits automatiquement dans une pâture ainsi que dans une étable, laquelle installation comprend une stalle de traite (9), qui comprend un robot de traite (25), **caractérisée en ce que** la stalle de traite (9) comprend un dispositif d'expulsion mobile (26) relié à celle-ci, de sorte que lesdits animaux puissent être conduits d'une zone (A) jusqu'à ladite stalle de traite (9) et, de là, jusqu'à une autre zone (B).

2. Installation selon la revendication 1, **caractérisée en ce que** le dispositif d'expulsion (26) comprend au moins un premier bras (27) qui est pivotant autour d'un arbre dirigé vers le haut.

3. Installation selon la revendication 2, **caractérisée en ce qu'**un deuxième bras (28), qui est pivotant par rapport à ce premier bras (27), est appliqué à ou à proximité de l'extrémité du premier bras (27).

4. Installation selon la revendication 3, **caractérisée en ce que** la capacité à pivoter des deux bras (27, 28) est obtenue au moyen de moteurs pas à pas.

5. Installation selon la revendication 3 ou 4, **caractérisée en ce qu'**un fil électrique de clôture est suspendu à ou à proximité de l'extrémité du deuxième bras (28).

6. Installation selon l'une quelconque des revendications précédentes, **caractérisée en ce que** le dispositif d'expulsion (26) comprend un capteur infrarouge, disposé sur la stalle de traite (9), pour détecter la position d'un animal.

7. Installation selon la revendication 6, **caractérisée en ce qu'**un animal présent dans une section de pâture peut passer dans la stalle de traite (9), si nécessaire aigruillonné par le dispositif d'expulsion (26), l'installation étant en outre organisée de telle sorte que l'animal, après avoir quitté la a stalle de traite (9), arrive dans une section de pâture adjacente.

8. Installation selon l'une quelconque des revendications précédentes, **caractérisée en ce que** l'installation est d'une conception telle que l'animal peut la traverser dans deux directions de marche différentes.

9. Installation selon l'une quelconque des revendications précédentes, **caractérisée en ce que** l'installation peut être agencée de telle sorte que les animaux puissent être traits automatiquement lorsqu'ils passent, dans une pâture, d'une première section dans une deuxième section adjacente.

10. Installation selon la revendication 9, **caractérisée en ce que** l'installation consiste en une stalle de traite mobile, dans laquelle une stalle de traite (9) comprenant une machine à traire comportant un robot de traite (25) est prévue.

11. Installation selon la revendication 10, **caractérisée en ce que** la stalle de traite (9) peut être déplacée à l'aide d'un tracteur (15).

12. Installation selon la revendication 11, **caractérisée en ce que** la stalle de traite comporte un cadre, à l'aide duquel elle peut être accouplée à l'attelage de levage (14) du tracteur (15).

13. Installation selon la revendication 8, **caractérisée en ce que** l'installation comprend une stalle de traite (9) comportant deux compartiments (10, 11), ces compartiments (10, 11) comportant sur le côté latéral une entrée (18, 19) et une sortie (20, 21), qui sont prévues de telle sorte que la direction de marche d'un animal à travers un compartiment soit opposée à la direction de marche d'un animal dans l'autre compartiment.

14. Installation selon la revendication 13, **caractérisée en ce qu'**elle peut être positionnée sur la limite entre deux sections de pâture qui, à tous les autres égards, sont séparées l'une de l'autre, et est agencée de telle sorte que les animaux puissent passer d'une section de pâture à l'autre section de pâture par l'intermédiaire d'un compartiment (10 ou 11) et de ladite dernière autre section de pâture à ladite première section de pâture par l'intermédiaire de l'autre compartiment (11, respectivement 10).

15. Installation selon l'une quelconque des revendications précédentes, **caractérisée en ce qu'**elle comprend une stalle de traite (9) qui comporte une entrée (18, 19) et une sortie (20, 21) et qui peut être positionnée d'une manière telle sur la limite entre deux sections de pâture, qui à tous les autres égards sont partiellement séparées l'une de l'autre, qu'un animal doive effectuer un déplacement circulaire à travers lesdites sections de pâture entre deux instants de traite consécutifs.

16. Installation selon l'une quelconque des revendications précédentes, **caractérisée en ce qu'**une séparation, qui est totalement ou partiellement agencée entre deux sections de pâture, est constituée par des bras repliables vers l'extérieur (30 à 33) montés sur l'accessoire, une clôture électrique (29) étant prévue pour l'installation.

17. Installation selon l'une quelconque des revendications précédentes, **caractérisée en ce que** l'installation fait partie d'un système de pâture dans lequel la clôture (29 à 37) d'une zone de la pâture est mobile.

18. Installation selon la revendication 17, **caractérisée en ce que** la clôture (29 à 37) est repliable à des fins de transport.

19. Installation selon l'une quelconque des revendications 17 ou 18, **caractérisée en ce que** la clôture (29 à 37) est supportée par des roues de sol (37).

20. Installation selon l'une quelconque des revendications 17 à 19, **caractérisée en ce que** la clôture (29 à 37) peut être déplacée par un tracteur (15).

21. Installation selon l'une quelconque des revendications 17 à 20, **caractérisée en ce que** l'installation est pourvue de quatre bras repliables (30 à 33), une clôture mobile d'une section de pâture étant formée par l'interconnexion des extrémités de ces bras (30 à 33).

22. Installation selon la revendication 21, **caractérisée en ce que** des supports (36) pour des roues de sol (37) sont disposés sous les extrémités des bras (30 à 33).

23. Installation selon la revendication 21 ou 22, **caractérisée en ce que** des supports pour un fil électrique de clôture (29) constituant une enceinte d'une section de pâture sont disposés sous les extrémités des bras (30 à 33).
